# EUROPÄISCHE PATENTSCHRIFT

(11) **EP 1 141 966 B1**
(45) Veröffentlichungstag und Bekanntmachung des Hinweises auf die Patenterteilung: **01.06.2005**
(21) Anmeldenummer: 99967945.9
(22) Anmeldetag: 15.12.1999
(51) Int. Cl.: G21C 3/322

(54) **BRENNELEMENT FÜR EINEN SIEDEWASSER-KERNREAKTOR**
FUEL ELEMENT FOR A BOILING WATER REACTOR
ELEMENT COMBUSTIBLE POUR REACTEUR NUCLEAIRE A EAU BOUILLANTE

(30) Priorität: 18.12.1998 DE 19858644
(43) Veröffentlichungstag der Anmeldung: 10.10.2001
(73) Patentinhaber: Framatome ANP GmbH, 91058 Erlangen (DE)
(72) Erfinder: BENDER, Dieter, D-91096 Möhrendorf (DE); BENDER, Otmar, D-91085 Weisendorf (DE); LIPPERT, Hans-Joachim, D-91315 Höchstadt/Aisch (DE); UEBELHACK, Walter, D-91058 Erlangen (DE)
(74) Vertreter: Mörtel & Höfner
(86) Internationale Anmeldenummer: PCT/EP1999/009983
(87) Internationale Veröffentlichungsnummer: WO 2000/038194

(56) Entgegenhaltungen:
- EP-A- 0 619 581
- EP-A- 0 632 469
- JP-A- 1 176 986

## Beschreibung

Die Erfindung betrifft ein Brennelement, insbesondere für einen Siedewasser-Kernreaktor, mit einem unten und oben offenen Brennelement-Kasten als Hülle um eine Vielzahl von Brennstäben, die sich untereinander und am Brennelement-Kasten über Abstandhalter abstützen.

Bei Brennelementen für Siedewasser-Kernreaktoren ist es erforderlich, einen ausreichend großen Abstand zur sogenannten maximalen Siedeübergangsleistung zu haben. Dabei ist die maximale Siedeübergangsleistung die Leistung, bei der die Dampfbildung im Brennelement noch nicht zu einer Verringerung der an das Kühlmittel abgegebenen Wärmemenge führt. Wird die maximale Siedeübergangsleistung überschritten, so bildet sich an der Oberfläche von in dem Brennelement enthaltenen Brennstäben ein Dampffilm oder gar eine Dampfschicht, die einen Wärmeübergangswiderstand darstellt. Da die im Brennstab erzeugte Wärmemenge dann vorübergehend nicht mehr vollständig abgeführt wird, steigt die Temperatur des Brennstabes an, bis sich ein neues thermisches Gleichgewicht einstellt. Dies kann zu einer Überhitzung des Brennstabes führen und damit auch zu einer thermischen Überlastung eines Brennstab-Hüllrohres. Eine derartige Überhitzung muß unbedingt vermieden werden, weil sie eine Lebensdauerverkürzung des Brennstabes und damit des Brennelementes zur Folge hätte.

Durch die EP-B1-0517750 ist es bekannt, die Kühlung der Brennstäbe durch eine Entmischung von Wassertröpfchen und Wasserdampf zu erhöhen. Die Wassertröpfchen werden dabei von Fahnen auf Abstandhalteroberseiten aus dem Zentrum eines von vier Brennstäben gebildeten Unterkanals für ein Kühlmittel an die Oberfläche der Brennstäbe umgeleitet, während der Wasserdampf im Zentrum des Unterkanals weiter nach oben strömt.

Solche Fahnen können aber gerade im Dampfbereich (d.h. dem oberen Bereich des Siedewasser-Brennelements, wo bereits ein erheblicher Teil des Kühlwassers als Dampf vorliegt, also dem "Zwei-Phasen-Bereich") nicht angeordnet werden, ohne die hydraulische Stabilität der Kühlmittelströmung zu beeinträchtigen. Diese Abstandhalter erhöhen nämlich den Druckverlust im 2-Phasen-Bereich. Neben einer nicht wünschenswerten, druckverlustbedingten Reduzierung des Wasserdurchsatzes durch ein solches Brennelement mit zusätzlichen Einbauten wird durch die Volumenvergrößerung, die beim Verdampfen entsteht, der Abfluß des Kühlmittels behindert. Sollen diese negativen Effekte verringert oder ganz vermieden werden, muß im 2-Phasen-Bereich der Druckverlust verringert werden. Eine derartige Verringerung kann unter anderem durch eine Vergrößerung des Strömungsquerschnitts erreicht werden. Der Strömungsquerschnitt kann vergrößert werden durch Leerpositionen im Brennstab-Gitter (EP-B1-0 517 728). Aus diesen Gründen wurden bisher teillange Brennstäbe verwendet und dabei auf den Einsatz von solchen Fahnen verzichtet. Die dadurch bewirkten Leerpositionen im oberen Brennelement-Bereich tragen außerdem zur Verbesserung des Abschaltverhaltens bei.

Durch die Verkürzung einiger Stäbe verringert sich zwar das Brennstoffvolumen im oberen Bereich des Brennelements, jedoch wird dadurch das Moderator/Brennstoff-Verhältnis wesentlich verbessert und der in den langen Brennstäben eingeschlossene Brennstoff brennt besser ab.

Es ist bekannt, daß dabei die maximale Siedeübergangsleistung, die von den verbleibenden langen Stäben bestimmt ist, abnimmt. In der JP 1-176986 A (1989) ist angegeben, daß der vergrößerte Strömungsquerschnitt und der entsprechend geringere Strömungswiderstand zu einem Geschwindigkeitsprofil des Kühlmittels führt, bei dem der Wasserfilm an der Brennstab-Oberfläche langsamer abfließt und daher schneller verdampft, also bereits bei geringerer Heizleistung zum Siedeübergang führt. Daher wird in dieser Schrift vorgeschlagen, den Strömungswiderstand der über den Enden der teillangen Stäbe liegenden Abstandhalter zu vergrößern. Dies kann durch dickere Gitterstege der Abstandhalter oder durch Vorsprünge (z.B. abgebogene Unterkanten der Gitterstege), die in den über den kürzeren Brennstäben liegenden Raum hineinragen, erreicht werden.

Aus den gleichen Gründen schlägt die US 5,229,068 vor, die oberen Abstandhalter aus höheren Stegen aufzubauen oder die Abstände der Abstandhalter zu verringern. Auch Verdrängungskörper oder wendelartig verdrillte Blechstreifen über den teillangen Brennstäben sollen die Verringerung des Strömungswiderstandes ganz oder teilweise wieder kompensieren, um die ursprünglichen Druckverhältnisse wieder herzustellen. Vor allem wird empfohlen, im oberen Teil des Brennelementes die Zahl der Abstandhalter zu erhöhen, also ihren Abstand kontinuierlich oder stufenweise zu verringern. Der größere Strömungswiderstand wird als Voraussetzung für eine höhere Siedeübergangsleistung angesehen.

Ein größerer Strömungswiderstand kann aber die hydraulischen Verhältnisse, die für eine ausreichende Kühlung nötig sind, erheblich verschlechtern und daher verhindern, ein solches Brennelement einzusetzen, selbst wenn eine höhere Siedeübergangsleistung möglich sein sollte.

Ein eindeutiger Zusammenhang zwischen Siedeübergangsleistung und Strömungswiderstand scheint auch nach anderen Experimenten nicht vorzuliegen. Vielmehr sind Maßnahmen erforderlich, mit denen die verbleibenden langen Brennstäbe, deren Leistung wegen des günstigen Moderator/Brennstoff-Verhältnisses hoch ist, wirksam gekühlt werden, ohne daß eine übermäßige Erhöhung des Druckverlusts auftritt. Dies ist Aufgabe der Erfindung.

Die Erfindung sieht daher vor, in dem über den kürzeren Brennstäben liegenden Bereich des Siedewasser-Brennelements Fahnen an den Oberkanten der Abstandhalter-Stege anzuordnen und die Zahl der Abstandhalter zu erhöhen (also ihren Abstand zu verringern) im Verhältnis zu der Zahl der Abstandhalter, die sich ergibt, wenn die Abstandhalter in dem gleichen Abstand angeordnet wären, wie im unteren Bereich des Brennelements. Die Fahnen sind dabei derart schräg in den Kühlmittelstrom gebogen, der entlang der langen Brennstäbe fließt, daß sie diesem Kühlmittelstrom einen Drall verleihen, der das flüssige Wasser aufgrund der Zentrifugalkraft auf die Brennstäbe leitet und den Dampf von der Oberfläche fernhält. Dadurch verstärkt sich der Wasserfilm an den Brennstab-Oberflächen, aber die abgebogenen Fahnen stehen nicht so weit in den Kühlmittelstrom, daß sie in den Raum über den kürzeren Brennstäben hineinragen. Der schnelle Abfluß des Dampfes wird also praktisch nicht gehindert. Dies führt zu den Merkmalen des Anspruchs 1.

Wegen dieser Ausbildung der oberen Abstandhalter und ihrer Fahnen wird der Abstand der Abstandhalter im Zwei-Phasen-Bereich zu einem Parameter, der es gestattet, die Siedeübergangsleistung und den Druckverlust gleichzeitig zu optimieren.

Gemäß der Erfindung sind also die Abstandhalter in einer unteren Gruppe A untereinander in gleichen, in einer oberen Gruppe B in (wenigstens im Mittel) geringeren vertikalen Abständen angeordnet. Die unteren Enden aller Brennstäbe liegen auf einem Niveau (sie stützen sich z.B. unten auf einer allen gemeinsamen unteren Stabhalteplatte ab), jedoch ist ein Teil der Brennstäbe verkürzt und endet oberhalb von Abstandhaltern, über denen vorteilhaft noch mindestens zwei Abstandhalter liegen. Höchstens die nicht verkürzten Brennstäbe stützen sich an einer oberen Stabhalteplatte ab. Dabei bleibt der Abstand des untersten und des obersten Abstandhalters vom jeweils benachbarten Abstandhalter außer Betracht.

Vorteilhaft werden die Abstände der Abstandhalter der oberen Gruppe B von unten nach oben kleiner; es kann jedoch bereits vorteilhaft sein, wenn sich in der oberen Gruppe zwei Abstände finden, die voneinander und vom konstanten Abstand in der unteren Gruppe verschieden sind.

Die Brennstäbe werden nämlich vom Kühlmittelstrom in Transversal-Vibrationen versetzt, die dadurch gedämpft werden, daß die Brennstäbe in den Maschen der Abstandhalter eingespannt sind. Erfolgt diese Einspannung in Ebenen, die konstanten Abstand voneinander haben, so bilden sich aber ausgeprägte Eigenschwingungen mit Schwingungsknoten in diesen Ebenen aus. Diese Eigenschwingungen werden aber verstimmt und gedämpft, wenn die Abstände der Abstandhalter-Ebenen unterschiedlich sind.

Dabei wird die Lage der Abstandhalter vorteilhaft so bestimmt, daß das obere Ende jedes kürzeren Brennstabs praktisch direkt in einer Masche eines Abstandhalters abgestützt ist. Bei Siedewasser-Brennelementen werden diese Eigenschwingungen besonders im unteren Bereich angeregt, in dem nur flüssiges Wasser strömt, und dort wird die Reibung der Brennstäbe an den Gittern - mit der Gefahr von Brennstab-Schäden - vermindert, wenn die Brennstäbe in den konstanten Abständen der Schwingungsknoten eingespannt sind. Die Dämpfung der Eigenschwingung erfolgt dabei vorteilhaft durch unterschiedliche Abstands-Ebenen im oberen Teil der Brennelemente, wo das strömende Wasser/Dampf-Gemisch die Transversal-Schwingungen nicht so heftig anregt.

Gemäß zweckmäßigen Weiterbildungen der Erfindung sind nur die verkürzten Brennstäbe in der unteren Stabhalteplatte verankert und/oder nehmen die Abstände in der oberen Gruppe B der Abstandhalter von Abstandhalter zu Abstandhalter um 30 % bis 10 % (bezogen auf den Abstand der Abstandhalter der unteren Gruppe A) ab. Insbesondere enden die verkürzten Brennstäbe knapp oberhalb von Abstandhaltegittern, vorteilhaft bei einigen Brennstäben im Übergangsbereich von deren unterer zur oberen Gruppe.

Vorteilhafte Ausgestaltungen der Erfindung bestehen darin, daß die gleichen Abstände (Gruppe A) der Abstandhalter A entweder 568 mm oder 512 mm groß sind, und daß die Abstände in der oberen Gruppe der Abstandhalter von 400 mm auf 359 mm abnehmen. Es können Brennstäbe mit drei oder mit vier verschiedenen Längen vorgesehen sein. Sowohl zur unteren als auch zur oberen Gruppe der Abstandhalter gehören in der Regel jeweils zwei bis funf Stuck.

Weitere Ausgestaltungen der Erfindung werden dadurch erzielt, daß die Abstandhalter aus rechtwinklig zueinander angeordneten, sich gegenseitig durchdringenden, annähernd quadratische Maschen bildenden Metallstreifen bestehen, die die durch die Maschen geschobenen Brennstäbe in horizontaler Richtung federnd einspannen, daß in der Gruppe B neben den Durchdringungsstellen der Metallstreifen an deren oberem Rand Blechfahnen ausgestellt sind, die einem vertikal durch das Abstandhalter strömenden Kühlmittel aneinander benachbarter Durchdringungsstellen jeweils Drallimpulse um diese Durchdringungsstellen (vorzugsweise einander entgegengesetzte Drallimpulse) vermitteln und daß an jeder Durchdringungsstelle der Metallstreifen mindestens zwei (vorteilhaft vier) Blechfahnen vorgesehen sind.

Die Fahnen sind insbesondere von angeformten Teilen der Blechstreifen (Abstandhalter-Stege) gebildet. Erfindungsgemäße Brennelemente sind auch dadurch realisierbar, daß als Abstandhalter-Stege hohlzylindrische Hülsen mit ihren Seitenwänden miteinander verbundenen sind, und daß die Hülsen an ihrem oberen Ende Blechfahnen tragen, die einem zwischen benachbarten Hülsen hindurchströmenden Kühlmittel einen entsprechenden Drallimpuls aufzwingen.

Erfindungsgemäß gestaltete Brennelemente sind sehr vorteilhaft, weil sie ohne Beeinträchtigung der Sicherheit und mit relativ geringem Aufwand die maximale Siedeübergangsleistung erhöhen, ohne dabei unzulässige nukleare, thermohydraulische oder mechanische Belastungen hervorzurufen.

Die meisten Siedewasser-Brennelemente haben einen quadratischen Querschnitt des Brennelement-Kastens und der darin angeordneten Abstandhalter. Vorteilhaft ist dabei im Zentrum des Brennelements ein (zylindrisches oder insbesondere quadratisches) Kühlmittelrohr angeordnet, das auch im oberen Bereich des Brennelements flüssiges Kühlwasser (Moderator) führt und daher dort die Dichte des Moderators erhöht. Die Brennstäbe sind dabei in einem regulären quadratischen Muster um das Kühlmittelrohr herum angeordnet, d.h. die Abstandhalter bilden Maschen, die gleiche Form und Größe haben und deren Mittelpunkte jeweils die Eckpunkte von Quadraten bilden.

Es sind Brennelemente bekannt, die ein kreuzförmiges Kühlmittelrohr besitzen, das den Kastenquerschnitt in vier Quadranten zerlegt, oder eine Anordnung aus mehreren Kühlmittelrohren besitzen. In jedem Fall sitzt im Zentrum des Brennelement-Kastens kein Brennstab, vielmehr erstreckt sich die Kühlmittelrohr-Anordnung über dieses Zentrum und die Brennstäbe sind in einem regulären quadratischen Muster um diese Anordnung herum angeordnet.

Gemäß einem Ausführungsbeispiel der Erfindung kann der Mittelpunkt der Kühlmittelrohr-Anordnung in Richtung einer Diagonale des Kastenquerschnitts gegenüber dem Zentrum des Kastens versetzt sein. Alternativ oder zusätzlich kann auch das Bündel der Brennstäbe derart diagonal versetzt sein.

Dadurch können Inhomogenitäten im Verhältnis von Moderator zu Brennstoff, im Abbrand und in der Leistung ausgeglichen werden, die dadurch entstehen, daß die Brennelemente häufig derart im Kern angeordnet sind, daß einer Ecke des Brennelements ein Instrumentierungsrohr mit Meßsonden, der gegenüberliegenden Ecke ein kreuzförmiger Steuerstab benachbart ist. Häufig sind auch die Spalten, die zwischen den Außenseiten benachbarter Brennelement-Kästen entstehen und die die Steuerstäbe und Instrumentierungsrohre aufnehmen, unterschiedlich breit. Das Brennelement kann also häufig durch eine Diagonale in zwei Hälften geteilt werden, wobei in der einen Hälfte Brennstäbe sitzen, die wesentlich eher zu einem Siedeübergang neigen als die Brennstäbe der anderen Hälfte. Es ist daher vorteilhaft, diese eine Hälfte stärker zu kühlen, indem zusätzlich ein Teil des Kühlmittels in diese eine Hälfte geleitet wird.

Durch die genannte Versetzung entsteht eine entsprechende Exzentrizität im Brennelement, die solche Inhomogenitäten teilweise kompensiert und - besonders wenn die Länge und Verteilung der verkürzten Brennstäbe entsprechend gewählt wird - auch für ausreichende Kühlung und günstige Voidkoeffizienten sorgt. Einige Ausbildungsbeispiele der Erfindung werden anhand einer Zeichnung näher erläutert. Es zeigen
- FIG 1 bis 4: Seitenansichten von erfindungsgemäß gestalteten Brennelementen in schematischer Darstellung;
- FIG 5: ein Abstandhalter mit quadratischen und
- FIG 6: ein Abstandhalter mit runden Maschen zur Aufnahme von Brennstäben;
- FIG 7 und 8: Querschnitte durch zwei exzentrisch aufgebaute Brennelemente.

Einander entsprechende Bauteile sind in allen Figuren mit den gleichen Bezugszeichen versehen.

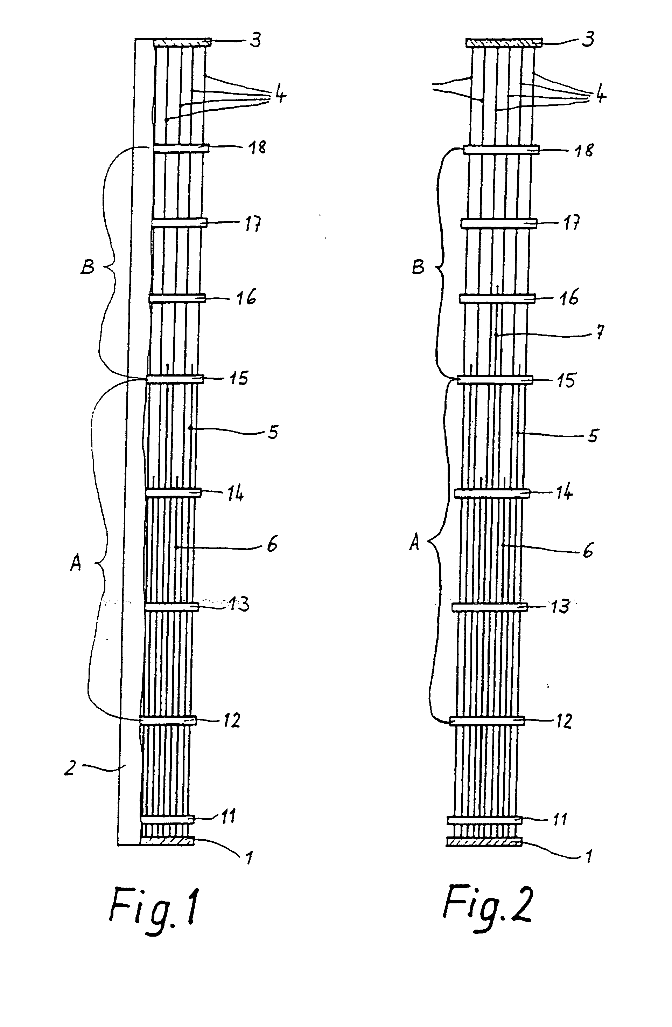

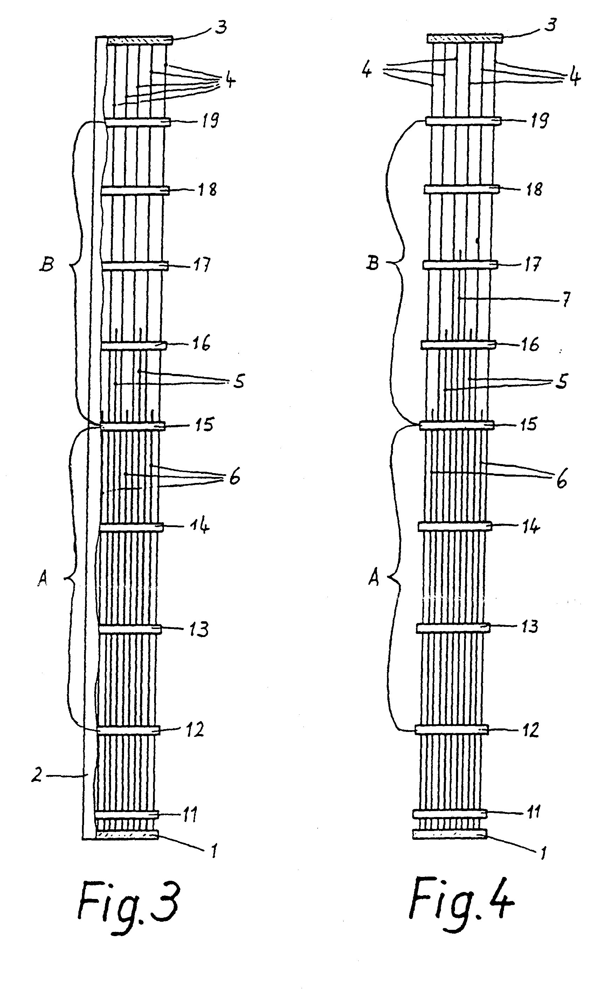

Ein Brennelement gemäß FIG 1 enthält eine Vielzahl von Brennstäben 4 bis 6, die sich im Betriebszustand vertikal zwischen einer unteren Stabhalteplatte 1 und einer oberen Stabhalteplatte 3 erstrecken. Die Stabhalteplatten 1 und 3 sind mit nicht dargestellten Kühlmitteldurchlässen versehen. Die Brennstäbe 4 bis 6 sind parallel zueinander angeordnet und in Abstandhalter 11 bis 18 eingespannt. Während die Brennstäbe normaler Länge nicht oder nur lose auf der unteren Stabhalteplatten aufstehen, sind die teillangen Stäbe mit ihrem unteren Ende in der Stabhalteplatte 1 fest verankert. Ein unten und oben offener Brennelementkasten 2 (nur in den FIG 1 und 3 teilweise dargestellt) umschließt das Bündel von Brennstäben 4 bis 6 und bildet einen geschlossenen Kanal für ein durch die untere Stabhalteplatte 1 eintretendes flüssiges Kühlmittel. Das Kühlmittel - vorzugsweise Wasser - wird auf seinem Weg durch den Brennelementkasten 2 durch die Brennstäbe 4 bis 6 erwärmt und beginnt.zu verdampfen, so daß im oberen Bereich des Brennelements ein Gemisch aus flüssigem und dampfförmigem Kühlmittel die Heizleistung der Brennstäbe aufnimmt.

Dieses Gemisch aus Flüssigkeit und Dampf hat ein größeres Volumen als die reine Flüssigkeit. Um trotzdem eine unerwünscht hohe Strömungsgeschwindigkeit bei niedrigem Massendurchsatz zu vermeiden, ist es an sich bekannt, einige der Brennstäbe zu verkürzen, so daß der lichte Kanalquerschnitt im oberen Bereich des Brennelement-Kastens 2 größer ist als im unteren Bereich.

Die Abstandhalter 11 bis 18 sind auslegungstechnisch in eine untere Gruppe A (12 bis 15) und in eine obere Gruppe B (15 bis 18) geteilt, wobei die Abstände der Abstandhalter 12 bis 15 in der Gruppe A untereinander gleich groß sind. Es können bereits zwei Stablängen (Voll-Länge und eine einzige TeilLänge) ausreichen, vorteilhafter (und aufwendiger) sind zwei Teillängen. Entsprechend sind die Abstände der Abstandhalter 15 bis 18 in der oberen Gruppe B kleiner, als in der unteren Gruppe A, insbesondere um so kleiner, je weiter oben sie sind. Zur genaueren Anpassung an für die Optimierung der maximalen Übergangsleistung erforderliche Werte sind die Brennstäbe 5 und 6 unterschiedlich stark verkürzt und enden zum Teil über dem Abstandhalter 14 und zum anderen Teil unmittelbar über dem die Grenze zwischen den Abstandhaltergruppen A und B darstellenden Abstandhalter 15.

Hierdurch wird der Abstand der Anordnung zur maximalen Siedeübergangsleistung vergrößert, so daß durch die erfindungsgemäß Anordnung auslegungstechnisch ein zusätzlicher Optimierungsparameter geschaffen ist.

FIG 2 zeigt ebenfalls ein Brennelement mit 8 Abstandhaltern 11 bis 18, die auslegungstechnisch in eine Gruppe A und in eine Gruppe B unterteilt sind. Der Übersichtlichkeit wegen ist hier der Brennelementkasten 2 nicht dargestellt. Um einer von der für die Anordnung nach FIG 1 abweichenden Auslegungssituation gerecht zu werden, sind hier auch Brennstäbe 7 vorgesehen, die weniger verkürzt sind, als die Brennstäbe 5 und 6.

Weitere Variationen von erfindungsgemäß gestalteten Brennelementen zeigen die FIG 3 und 4. Bei diesen beiden Lösungen sind jeweils 9 Abstandhalter 11 bis 19 vorgesehen, wobei in FIG 3 wie in FIG 1 mit drei unterschiedlichen Brennstablängen und in FIG 4 wie in FIG 2 mit vier unterschiedlichen Brennstablängen gerechnet wird.

Die FIG 1 bis 4 zeigen jeweils nur eine von beispielsweise neun bis elf hintereinander stehenden Brennstabreihen, die alle unterschiedlich mit Brennstäben unterschiedlicher Länge bestückbar sind.

Alle vorgenannten Maßnahmen zusammen oder je für sich, ermöglichen eine Optimierung der maximalen Siedeübergangsleistung über einen weiten Bereich.

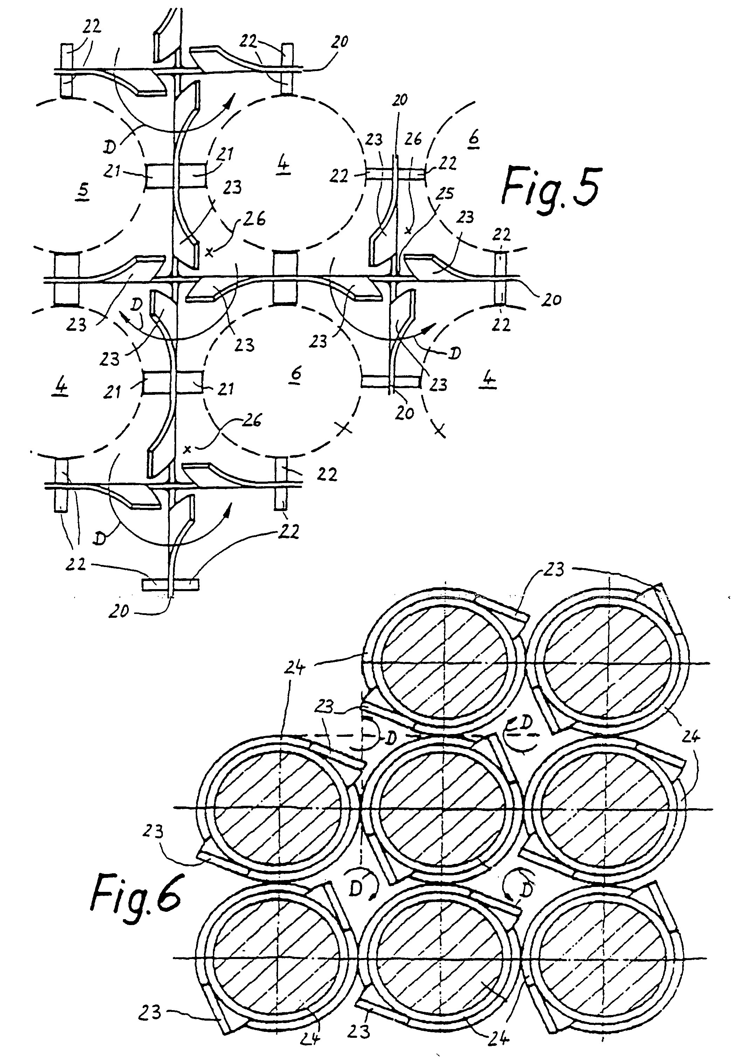

Die Anordnung gemäß den FIG 1 bis 4 sind insbesondere deshalb vorteilhaft, weil sie uneingeschränkt Maßnahmen zur Entmischung der flüssigen und der dampfförmigen Phase im oberen Bereich des Brennelements ermöglichen. Zu diesem Zweck dienen Einrichtungen an den Abstandhaltern 11 bis 19, die in den FIG 5 und 6 dargestellt sind.

FIG 5 zeigt in stark vergrößertem Maßstab einen der Abstandhalter 11 bis 19, das aus sich rechtwinklig kreuzenden Metallstreifen 20 besteht, die sich gegenseitig durchdringen. Die Metallstreifen 20 bilden annähernd quadratische Maschen zur Aufnahme der Brennstäbe 4 bis 7, die in den Maschen durch Noppen 21 und Federn 22 fest eingespannt sind. Neben Kreuzungspunkten der Metallstreifen 20 sind jeweils nach oben gerichtete, seitlich abgebogene Blechfahnen 23 vorgesehen, von denen jeweils die neben derselben Kreuzungsstelle 25 angeordneten gleichsinnig auf einen parallel zu den Brennstäben 4 bis 7 durch die Abstandhalter 11 bis 19 fließenden Teilstrom des Kühlmittels einwirken, so daß dieser Teilstrom 26 einen Drallimpuls D erhält. Die dadurch verursachte Drehbewegung erzeugt in dem Teilstrom 26 eine Zentrifugalbeschleunigung, die die flüssige Phase des Kühlmittels gegen die Brennstäbe 4 bis 7 schleudert und deren Kühlung verstärkt.

Im Prinzip ebenso wirkt ein Abstandhalter gemäß FIG 6, bei dem die zur Aufnahme der Brennstäbe 4 bis 7 vorgesehenen Maschen von hohlzylindrischen Hülsen 24 gebildet sind, die ebenfalls Blechfahnen 23 tragen und dem vorbeifließenden Teilstrom 26 des Kühlmittels einen Drallimpuls D aufzwingen.

Die gezeigten Fahnen sind unterhalb des allerobersten Abstandhalters an einigen (vorzugsweise allen) Abstandhaltern der Gruppe B vorgesehen, sie fehlen in der Gruppe A oder sind dort nur viel kleiner. Dadurch wird die hydraulische Stabilität erhöht, denn im Vergleich zum oberen Teil darf im unteren Teil des Brennelements der Druckabfall nicht zu niedrig sein. Es ist auch möglich, im Interesse eines niedrigen Druckverlustes im oberen Teil bei einem oder mehreren Abstandhaltern (z.B. Position 17 in den Figuren 1 bis 4) auf Federn, Noppen oder ähnliche Halteelemente für die Brennstäbe zu verzichten.

In Figur 5 und 6 ist ein Abstandhalter-Bereich gezeigt, dessen Maschen alle von jeweils einem Brennstab durchsetzt sind (ausgenommen an den Positionen, die von einem Wasserrohr eingenommen sind). Oberhalb der teillangen Brennstäbe treten aber Maschen auf, durch die kein Brennstab führt. Die Ausbildung der Fahnen ist dabei vorteilhaft unverändert - jedenfalls ragen auch dann die Fahnen nicht in den Flächenbereich hinein, der in der geradlinigen Fortsetzung der dargestellten teillangen Brennstäbe liegt, also über den teillangen Brennstäben entsteht. In solchen Maschen können allerdings Federn, Noppen oder ähnliche Stützen für die Brennstäbe fehlen.

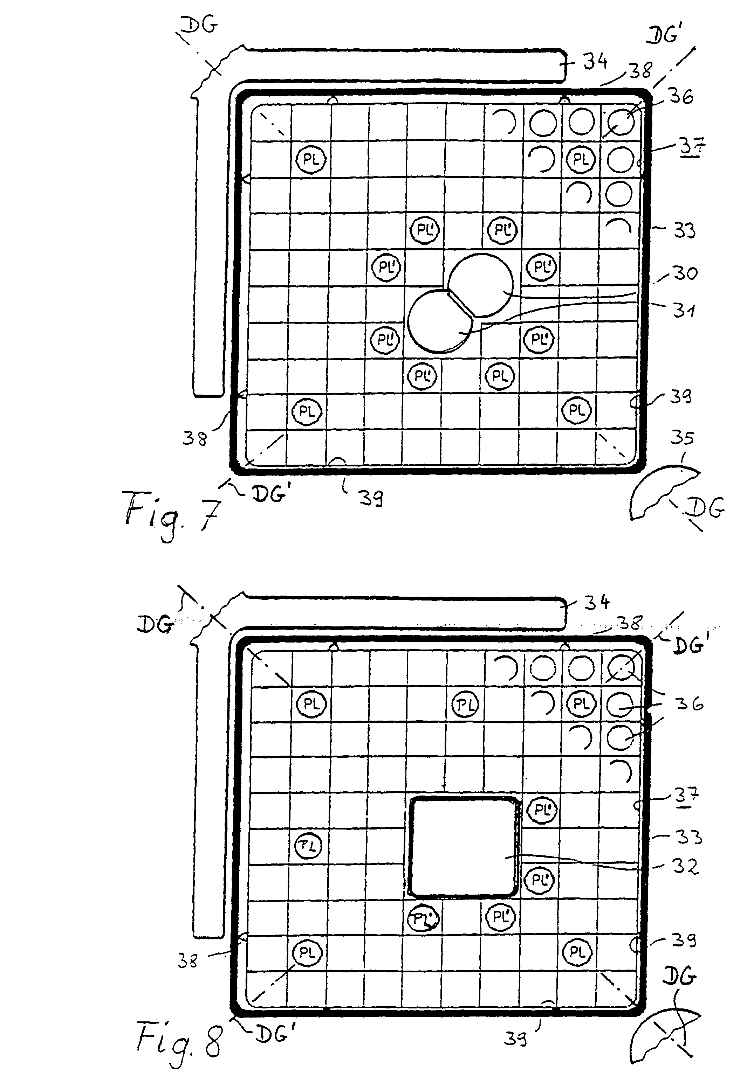

In Siedewasser-Brennelementen ist eine Anordnung mit wenigstens einem Kühlmittelrohr vorteilhaft, um sicherzustellen, daß auch in der Dampf/Flüssigkeits-Zone des Brennelements genügend flüssiger Moderator (Kühlwasser) im Zentrum des Brennelements vorhanden ist. Genau so wirken auch Brennstäbe, deren Länge auf die Hälfte bis 2/3 der normalen Brennstablänge verkürzt ist. Bisher ging man davon aus, daß im regulären Muster, in dem die Brennstäbe über den Querschnitt des Brennelements verteilt sind, alle Positionen, die der Kühlmittelrohr-Anordnung oder einem teillangen Brennstab benachbart sind, von Brennstäben mit voller Länge besetzt sein müssen. Nach dieser Regel sind in den Figuren 7 und 8 die teillangen Brennstäbe PL angeordnet. Es ist jedoch vorteilhaft, wenn zumindest mehrere Brennstäbe, die der Kühlmittelrohr-Anordnung direkt benachbart sind, mit verkürzten Brennstäben besetzt sind, wie anhand der Brennstäbe PL' in Figuren 7 und 8 dargestellt ist.

Als Kühlmittelrohr-Anordnung ist in FIG 7 in Beispiel mit zwei D-förmigen Rohren 30, 31 und in FIG 8 ein einziges Kühlmittelrohr mit quadratischem Querschnitt gezeigt. In beiden Fällen überdeckt diese Kühlmittelrohr-Anordnung mehrere Brennstab-Positionen und im Zentrum des Brennelements befindet sich kein Brennstab.

Im Reaktorkern dient eine Ecke des Brennstab-Kastens 33 als Führung für einen kreuzförmigen Steuerstab 34, die diametral gegenüberliegende Ecke ist einem Instrumentierungsrohr 35 für Meßsonden benachbart. Diese Anordnung der Meßsonden und Steuerstäbe in den Spalten zwischen den Außenflächen benachbarter Brennelement-Kästen bedingt eine relativ große Breite dieser wassergefüllten Spalten, wobei die Steuerstäbe führenden Spalten häufig breiter sind als die anderen Spalten. Dies führt zu einer ungleichen Verteilung von Absorptionsmaterial, Moderator und Brennstoff und somit zu Inhomogenitäten im Neutronenfluß sowie der Leistung und dem Abbrand der Brennstäbe. Um eine gute Ausnutzung des Brennstoffs mit einem hinreichenden Abstand von der Siedeübergangsleistung, also eine den unvermeidlichen Inhomogenitäten angepaßte Kühlung, zu erreichen, ist es vorteilhaft, wenn die Kühlmittelrohr-Anordnung nicht zentrisch, sondern von dem Steuerstab weg diagonal in die entgegengesetzte Ecke versetzt ist. Dies wird bereits erreicht, wenn die Kühlmittelrohr-Anordnung entsprechend exzentrisch in dem Muster der Brennstäbe sitzt.

Die Figuren 7 und 8 zeigen einige der Brennstäbe 36 voller Länge sowie die Stege der Abstandhalter 34, die über entsprechende Distanzelemente 38, 39, die am Außensteg der Abstandhalter angeordnet sind, in einem vorgegebenen Abstand von den Innenflächen des Brennelement-Kastens 33 gehalten werden. Dabei zeigen die Figuren 7 und 8, daß vorteilhaft bereits das ganze Muster der um die Kühlmittelrohr-Anordnung herum angeordneten Brennstäbe in der gleichen exzentrischen Anordnung im Kasten gehalten sind. Entsprechend geben die Distanzelemente 38 einen breiteren Spalt zwischen dem Außensteg des Abstandhalters und der Kasten-Innenfläche vor als die Distanzelemente 39.

Ferner zeigt die FIG 8, daß vorteilhaft auch die verkürzten Brennstäbe ähnlich exzentrisch über den Brennelement-Querschnitt verteilt sind: Die Diagonale DG bezeichnet die Richtung, in der die Kühlmittelrohr-Anordnung und das gesamte Muster der Brennstäbe gegenüber der Mittelachse des Brennelement-Kastens versetzt sind. In der diagonalen Hälfte des Kastenquerschnitts, die symmetrisch um die Diagonale DG angeordnet und dem Instrumentierungsrohr 35 benachbart ist (also von der zweiten Diagonale DG' begrenzt ist und zumindest den größeren Teil der Kühlmittelrohr-Anordnung enthält), befinden sich mehr verkürzte Brennstäbe PL und PL' als in der anderen Hälfte, die symmetrisch um die Diagonale DG angeordnet und dem Steuerstab 34 benachbart ist. Außerdem zeigt Figur 8, daß vorteilhaft in der durch die Diagonale DG' begrenzten Hälfte die Wände der Wasserkanal-Anordnung 32 näher an den benachbarten Brennstäben (z.B. PG') benachbart sind als die Brennstäbe in der anderen Hälfte.

In diesen Figuren sind mit PL Brennstäbe bezeichnet, die weniger stark verkürzt sind als die Brennstäbe PL', d.h. die Brennstäbe PL' besitzen die geringste Brennstab-Länge. Gemäß FIG 8 sind vorteilhaft mehrere der Kühlmittelrohr-Anordnung 32 unmittelbar benachbarte Brennstäbe auf diese geringste Länge verkürzt und in der entsprechenden, dem Instrumentierungsrohr 35 benachbarten Diagonalhälfte des Kasten-Querschnitts befindet sich zumindest die Mehrzahl dieser Brennstäbe mit der kürzesten Brennstablänge.

Diese Regeln zum Anordnen der Kühlmittelrohr-Anordnung, der Brennstäbe und insbesondere der teillangen Brennstäbe können mit Vorteil bereits bei Siedewasser-Brennelementen angewendet werden, deren Abstandhalter in konstantem axialen Abstand voneinander angeordnet sind; eine besonders vorteilhafte Auslegung ergibt sich jedoch, wenn die Abstandhalter in einem unteren Bereich einen konstanten, im oberen Bereich aber einen mittleren Abstand haben, der geringer ist als der konstante Abstand im unteren Bereich.

## Patentansprüche

1. Brennelement, insbesondere für einen Siedewasser-Kernreaktor mit einem unten und oben offenen Brennelement-Kasten (2) als Hülle um eine Vielzahl von Brennstäben (4 bis 7) mit folgenden Merkmalen:
a) die Brennstäbe sind untereinander und am Brennelement-Kasten (2) über Abstandhalter (11 bis 19) abgestützt und ihr unteres Ende liegt praktisch auf der Höhe einer unteren Stabhalteplatte,
b) die Abstandhalter (11 bis 19) sind in einer unteren Gruppe A (12 bis 15) in untereinander gleichen, in einer oberen Gruppe B (15 bis 18) in mindestens davon abweichenden vertikalen Abständen angeordnet, wobei der mittlere Abstand der Abstandhalter (12 bis 15) in der oberen Gruppe B kleiner als in der unteren Gruppe ist, und
c) einige der Brennstäbe sind kürzer als andere und enden unterhalb der beiden obersten Abstandhalter,
**dadurch gekennzeichnet, daß** zumindest mehrere Abstandhalter der Gruppe B an ihrer Oberseite Fahnen tragen, die schräg in den zwischen den Brennstäben nach oben fließenden Kühlmittelstrom gebogen sind, um dem Kühlmittelstrom einen Drall zu verleihen, und daß in den über den kürzeren Brennstäben liegenden Raum hinein keine Fahnen ragen.

2. Brennelement nach Anspruch 1,
**dadurch gekennzeichnet, daß** die Abstände in der oberen Gruppe von unten nach oben kleiner werden.

3. Brennelement nach Anspruch 1 oder 2,
**dadurch gekennzeichnet, daß** der Abstand des untersten (11) und des obersten Abstandhalters (18 bzw. 19) vom jeweils benachbarten Abstandhalter außer Betracht bleibt.

4. Brennelement nach einem der Ansprüche 1 bis 3,
**dadurch gekennzeichnet, daß** die kürzesten Brennstäbe oberhalb Abstandhaltern im Übergangsbereich von deren unteren zur oberen Gruppe enden.

5. Brennelement nach einem der Ansprüche 1 bis 4,
**dadurch gekennzeichnet, daß** nur die kürzeren Brennstäbe (5 bis 7) in der unteren Stabhalteplatte (1) verankert sind.

6. Brennelement nach einem der Ansprüche 1 bis 5,
**dadurch gekennzeichnet, daß** die Abstände in der oberen Gruppe B der Abstandhalter (15 bis 18) von Abstandhalter zu Abstandhalter um 30 % bis 10 % des Abstandes der Abstandhalter (12 bis 15) innerhalb von deren unterer Gruppe A abnehmen.

7. Brennelement nach einem der Ansprüche 1 bis 6,
**dadurch gekennzeichnet, daß** entweder die gleichen Abstände der Abstandhalter (12 bis 15) in deren unterer Gruppe A zwischen 500 bis 520 mm, vorteilhaft etwa 512 mm, groß sind und die Abstände in der oberen Gruppe B zwischen 350 und 410 mm liegen, vorteilhaft von etwa 400 mm auf etwa 359 mm abnehmen, oder daß die gleichen Abstände in der unteren Gruppe zwischen 520 und 580 mm, vorteilhaft etwa 568 mm, groß sind und die Abstände in der oberen Gruppe von einem Wert zwischen 500 und 390 mm, vorteilhaft etwa 400 mm, auf einen Wert zwischen 450 und 320, vorteilhaft etwa 359 mm, abnehmen.

8. Brennelement nach einem der Ansprüche 1 bis 7,
**dadurch gekennzeichnet, daß** mindestens Brennstäbe (4 bis 6) mit drei verschiedenen Längen vorgesehen sind.

9. Brennelement nach einem der Ansprüche 1 bis 8,
**dadurch gekennzeichnet, daß** zumindest alle Abstandhalter (11 bis 19) der Gruppe A aus rechtwinklig zueinander angeordneten, sich gegenseitig durchdringenden, annähernd quadratische Maschen bildenden Metallstreifen (20) bestehen, die die durch die Maschen geschobenen Brennstäbe (4 bis 7) in horizontaler Richtung federnd einspannen.

10. Brennelement nach einem der Ansprüche 1 bis 9,
**dadurch gekennzeichnet, daß** die oberhalb der kürzesten Brennstäbe angeordneten Abstandhalter aus rechtwinklig zueinander angeordneten, sich gegenseitig durchdringenden, annähernd quadratische Maschen bildenden Metallstreifen (20) bestehen, die die durch die Maschen geschobenen Brennstäbe (4 bis 7) in horizontaler Richtung federnd einspannen und neben den Durchdringungsstellen (25) der Metallstreifen (20) an deren oberem Rand die Fahnen (23) angeordnet sind.

11. Brennelement nach Anspruch 10,
**dadurch gekennzeichnet, daß** die Fahnen neben einander benachbarten Durchdringungsstellen (25) dem Kühlmittelstrom jeweils einen entgegengesetzten Drall (D) verleiten.

12. Brennelement nach einem der Ansprüche 1 bis 12,
**dadurch gekennzeichnet, daß** an jeder Durchdringungsstelle (25) der Metallstreifen (20) vier Blechfahnen (23) vorgesehen sind.

13. Brennelement nach einem der Ansprüche 1 bis 8,
**dadurch gekennzeichnet, daß** die Abstandhalter (11 bis 19) aus mit ihren Seitenwänden miteinander verbundenen, hohlzylindrischen Hülsen (24) bestehen und daß nur bei Abstandhaltern der Gruppe B die Hülsen (24) an ihrem oberen Ende die Fahnen (23) tragen.

14. Brennelement nach einem der Ansprüche 1 bis 13,
**dadurch gekennzeichnet, daß** der Kasten (33) und die Abstandhalter (37) einen quadratischen Querschnitt haben und die Brennstäbe (36) in einem regulären quadratischen Muster um eine im Zentrum des Kastens angeordnete Anordnung mit mindestens einem Kühlmittelrohr (30,31,32) angeordnet sind.

15. Brennelement nach Anspruch 14,
**dadurch gekennzeichnet, daß** die Mittelachse der Anordnung mit mindestens dem einen Kühlmittelrohr (35,36,37) in Richtung einer Diagonale (DG) des Kastenquerschnitts gegenüber der Mittelachse des Kastens (33) versetzt ist.

16. Brennelement nach Anspruch 15,
**dadurch gekennzeichnet, daß** die Mittelachse der Anordnung mit mindestens dem einen Kühlmittelrohr auf einer Seite einer zur Diagonalen (DG) senkrechten zweiten Diagonalen liegt, in der die am Rand des Musters angeordneten Brennstäbe einen geringeren Abstand von der Wand des Kastens haben als der anderen Seite der zweiten Diagonale.

17. Brennelement nach Anspruch 14,
**dadurch gekennzeichnet, daß** das reguläre quadratische Muster in Richtung einer Diagonale (DG) des Kastenquerschnitts derart gegenüber der Mittelachse des Kastens versetzt ist, daß die am Rand des Musters angeordneten Brennstäbe an einem Ende der Diagonale (DG) jeweils einen größeren Abstand von einer Wand des Kastens (33) haben als am anderen Ende der Diagonalen (DG).

18. Brennelement nach einem der Ansprüche 15 oder 16,
**dadurch gekennzeichnet, daß** in einer symmetrisch zur Diagonalen (DG) angeordneten Hälfte des Kastenquerschnitts sich eine größere Anzahl von kürzeren Brennstäben befindet als in der anderen Hälfte des Kastenquerschnitts, und daß die Mittelachse der Anordnung mit mindestens dem einen Kühlmittelrohr auf der Seite einer zur Diagonalen (DG) senkrechten zweiten Diagonalen liegt, auf der sich die größere Anzahl der kürzeren Brennstäbe befindet.

19. Brennelement nach einem der Ansprüche 14 bis 18,
**dadurch gekennzeichnet, daß** mehrere der kürzeren Brennstäbe (PL,PL') unmittelbar neben der Anordnung mit wenigstens dem einen Kühlmittelrohr und in einer symmetrisch zur Diagonale (DG) angeordneten Hälfte des Kastenquerschnitts angeordnet sind.

20. Brennelement nach Anspruch 15,
**dadurch gekennzeichnet, daß** wenigstens ein Teil der kürzesten Brennstäbe (PL') unmittelbar der Anordnung mit wenigstens dem einen Kühlmittelrohr benachbart sind.

## Claims

1. Fuel element, in particular for a boiling water reactor, with a fuel element box (2) open at the bottom and top as a sheath around a plurality of fuel rods (4 to 7) with the following features:
a) the fuel rods are supported among one another and at the fuel element box (2) by means of spacer elements (11 to 19), and their lower end is located practically at the height of a lower rod retaining plate,
b) the spacer elements (11 to 19) are arranged in a lower group A (12 to 15) at equal distances from one another, and in an upper group B (15 to 18) at distance intervals which at least differ from this, whereby the average distance between the spacer elements (12 to 15) in the upper group B is smaller than in the lower group, and
c) some of the fuel rods are shorter than others, and end beneath the two uppermost spacer elements,
**characterised in that** at least several spacer elements of the group B carry vanes on their upper side, which are curved obliquely into the coolant flow which flows upwards between the fuel rods, in order to lend a twist to the coolant flow, and that no vanes project into the space located above the shorter fuel rods.

2. Fuel element according to Claim 1,
**characterised in that** the distance intervals in the upper group become smaller from the bottom to the top.

3. Fuel element according to Claim 1 or 2,
**characterised in that** the distance interval between the lowest (11) and uppermost spacer elements (18 and 19 respectively) and the adjacent spacer element in each case is not taken into consideration.

4. Fuel element according to one of Claims 1 to 3,
**characterised in that** the shortest fuel rods end above spacer elements in the transition area from the lower to their upper group of the spacer elements.

5. Fuel element according to one of Claims 1 to 4,
**characterised in that** only the shortest fuel rods (5 to 7) are anchored in the lower rod retaining plate (1).

6. Fuel element according to one of Claims 1 to 5,
**characterised in that** the distance intervals in the upper group B of the spacer elements (15 to 18) decrease from spacer element to spacer element by 30 % to 10 % of the distance interval of the spacer elements (12 to 15) within the lower group A.

7. Fuel element according to one of Claims 1 to 6,
**characterised in that** either the same distance intervals between the spacer elements (12 to 15) in the lower group A are between 500 and 520 mm, advantageously about 512 mm, and the distance intervals in the upper group B are between 350 and 410 mm, advantageously decreasing from some 400 mm to some 359 mm, or that the same distance intervals in the lower group are between 520 and 580 mm, advantageously about 568 mm, and the distance intervals in the upper group decrease from a value between 500 and 390 mm, advantageously about 400 mm, to a value of between 450 and 320, advantageously about 359 mm.

8. Fuel element according to one of Claims 1 to 7,
**characterised in that** at least fuel rods (4 to 6) are provided with three different lengths.

9. Fuel element according to one of Claims 1 to 8,
**characterised in that** at least all the spacer elements (11 to 19) of the group A consist of metal strips (20) arranged at right angles to one another, and passing mutually through one another thereby forming meshes which are approximately square, which impose spring tension in the horizontal direction on the fuel rods (4 to 7) which are pushed through the meshes.

10. Fuel element according to one of Claims 1 to 9,
**characterised in that** the spacer elements arranged above the shortest fuel rods consist of metal strips (20) arranged at right angles to one another, and passing mutually through one another thereby forming meshes which are approximately square, which impose spring tension in the horizontal direction on the fuel rods (4 to 7) which are pushed through the meshes, and the vanes (23) are arranged next to the penetration points (25) of the metal strips (20) at the upper edge.

11. Fuel element according to Claim 10,
**characterised in that** the vanes next to mutually adjacent penetration points (25) induce a reverse swirl (D) in the coolant flow.

12. Fuel element according to one of Claims 1 to 12,
**characterised in that** four sheet metal vanes (23) are provided for at each penetration point (25) of the metal strips (20).

13. Fuel element according to one of Claims 1 to 8,
**characterised in that** the spacer elements (11 to 19) consist of hollow cylindrical sheaths (24) connected to one another by their side walls, and that only the sheaths (24) of the spacer elements of group B carry the vanes (23) at their upper ends.

14. Fuel element according to one of Claims 1 to 13,
**characterised in that** the box (33) and the spacer elements (37) have a square cross-section, and the fuel rods (36) are arranged in a regular square pattern around an arrangement arranged in the centre of the box, with at least one coolant pipe (30, 31, 32).

15. Fuel element according to Claim 14,
**characterised in that** the mid-axis of the arrangement with the at least one coolant pipe (35, 36, 37) is displaced in the direction of a diagonal (DG) of the box cross-section compared to the mid-axis of the box (33).

16. Fuel element according to Claim 15,
**characterised in that** the mid-axis of the arrangement with the at least one coolant pipe is located on one side of a second diagonal perpendicular to the diagonal (DG), in which the fuel rods arranged at the edge of the pattern have a smaller distance interval from the wall of the box than the other side of the second diagonal.

17. Fuel element according to Claim 14,
**characterised in that** the regular square pattern in the direction of a diagonal (DG) of the box cross-section is displaced in relation to the mid-axis of the box in such a way that the fuel rods arranged at the edge of the pattern, at one end of the diagonal (DG) in each case have a greater distance interval from one wall of the box (33) than at the other end of the diagonal (DG).

18. Fuel element according to one of Claims 15 or 16,
**characterised in that**, in a half of the box cross-section arranged symmetrically to the diagonal (DG), there are located a larger number of shorter fuel rods than in the other half of the box cross-section, and that the mid-axis of the arrangement with the at least one coolant pipe is located on the side of a second diagonal perpendicular to the diagonal (DG), on which the larger number of the shorter fuel rods are located.

19. Fuel element according to one of Claims 14 to 18,
**characterised in that** several of the shorter fuel rods (PL, PL') are arranged directly next to the arrangement with the at least one coolant pipe and in a half of the box cross-section arranged symmetrically to the diagonal (DG).

20. Fuel element according to Claim 15,
**characterised in that** at least a part of the shortest fuel rods (PL') are directly adjacent to the arrangement with the at least one coolant pipe.

## Revendications

1. Assemblage combustible, notamment pour un réacteur nucléaire à eau bouillante, comprenant un boîtier-canal (2) d'assemblage combustible ouvert en haut et en bas en tant qu'enveloppe autour d'une pluralité de crayons (4 à 7) combustibles ayant les caractéristiques suivantes :
a) les crayons combustibles s'appuient entre eux et sur le boîtier canal (2) d'assemblage combustible par des entretoises (11 à 19) et son extrémité inférieure se trouve pratiquement au niveau d'une plaque inférieure de maintien des crayons ;
b) les entretoises (11 à 19) sont disposées dans un groupe A (12 à 15) inférieur à des distances verticales égales entre elles, dans un groupe B (15 à 18) supérieur à au moins des distances verticales s'en écartant, la distance moyenne des entretoises (12 à 15) dans le groupe B supérieur étant plus petite que dans le groupe inférieur ; et
c) certains des crayons combustibles sont plus courts que d'autres et se terminent en dessous des deux entretoises les plus hautes,
**caractérisé en ce qu'**au moins plusieurs entretoises du groupe B portent sur leur côté supérieur des talons qui sont courbés de manière inclinée dans le courant de fluide de refroidissement s'écoulant vers le haut entre les crayons combustibles, pour donner au courant de fluide de refroidissement un tourbillon, et **en ce que** des talons ne font pas saillie dans l'espace se trouvant au-dessus des crayons combustibles les plus courts.

2. Assemblage combustible suivant la revendication 1,
**caractérisé en ce que** les distances dans le groupe supérieur deviennent plus petites du bas vers le haut.

3. Assemblage combustible suivant la revendication 1 ou 2,
**caractérisé en ce que** la distance de l'entretoise (11) la plus basse et de l'entretoise (18 ou 19) la plus haute à l'entretoise, respectivement, voisine n'est pas prise en considération.

4. Assemblage combustible suivant l'une des revendications 1 à 3,
**caractérisé en ce que** les crayons combustibles les plus courts se terminent au-dessus des entretoises dans la zone de transition de leur groupe inférieur à leur groupe supérieur.

5. Assemblage combustible suivant l'une des revendications 1 à 4,
**caractérisé en ce que** seuls les crayons (5 à 7) combustibles les plus courts sont ancrés dans la plaque inférieure de maintien des crayons.

6. Assemblage combustible suivant l'une des revendications 1 à 5,
**caractérisé en ce que** les distances dans le groupe B supérieur des entretoises (15 à 18) diminuent d'une entretoise à l'autre de 30 % à 10 % de la distance des entretoises (12 à 15) à l'intérieur de leur groupe A inférieur.

7. Assemblage combustible suivant l'une des revendications 1 à 6,
**caractérisé en ce que**, ou bien les distances des entretoises (12 à 15) dans leur groupe A inférieur sont identiques en étant comprises entre 500 et 520 mm, de préférence en étant d'environ 510 mm, et les distances dans le groupe B supérieur sont comprises entre 350 et 410 mm, de préférence en diminuant d'environ 400 mm à environ 359 mm, ou bien les distances dans le groupe inférieur sont égales en étant comprises entre 520 et 580 mm, de préférence en étant à peu près égales à 566 mm, et les distances dans le groupe supérieur diminuent d'une valeur comprise entre 500 et 390 mm, de préférence d'une valeur d'environ 400 mm, à une valeur comprise entre 450 et 320, et de préférence d'environ 359 mm.

8. Assemblage combustible suivant l'une des revendications 1 à 7,
**caractérisé en ce qu'**il est prévu au moins des crayons (4 à 6) combustibles ayant trois longueurs différentes.

9. Assemblage combustible suivant l'une des revendications 1 à 8,
**caractérisé en ce qu'**au moins toutes les entretoises (11 à 19) du groupe A sont constituées de bandes (20) métalliques disposées perpendiculairement entre elles, se traversant mutuellement et formant des mailles à peu près carrées, qui bloquent élastiquement en direction horizontale les crayons (4 à 7) combustibles enfilés dans les mailles.

10. Assemblage combustible suivant l'une des revendications 1 à 9,
**caractérisé en ce que** les entretoises disposées au-dessus des crayons combustibles les plus courts sont constituées de bandes (20) métalliques disposées à angle droit les unes par rapport aux autres, se traversant mutuellement et formant des mailles à peu près carrées, qui bloquent élastiquement en direction horizontale les crayons (4 à 7) combustibles enfilés dans les mailles, et les talons (23) sont disposés à côté des points (25) de traversée des bandes (20) métalliques sur leur bord supérieur.

11. Assemblage combustible suivant la revendication 10,
**caractérisé en ce que** les talons à côté des points (25) de traversée mutuellement voisins donnent au courant du fluide de refroidissement, respectivement, un tourbillonnement (D) de sens opposé.

12. Assemblage combustible suivant l'une des revendications 1 à 11,
**caractérisé en ce qu'**il est prévu quatre talons (23) de tôle à chaque point (25) de traversée des bandes (20) métalliques.

13. Assemblage combustible suivant l'une des revendications 1 à 8,
**caractérisé en ce que** les entretoises (11 à 19) sont constituées de manchons (24) cylindriques creux reliés entre eux par leur paroi latérale et **en ce que** seulement dans les entretoises du groupes B, les manchons (24) portent les talons (23) sur leur extrémité supérieure.

14. Assemblage combustible suivant l'une des revendications 1 à 13,
**caractérisé en ce que** le boîtier-canal (33) et les entretoises (37) ont une section transversale carrée et les crayons (36) combustibles sont disposés suivant un modèle carré régulier autour d'un agencement prévu au centre du boîtier-canal et ayant au moins un tube (30, 31, 32) pour du fluide de refroidissement.

15. Assemblage combustible suivant la revendication 14,
**caractérisé en ce que** l'axe médian de l'agencement ayant au moins le tube (35, 36, 37) pour du fluide de refroidissement est décalé en direction d'une diagonale (DG) de la section transversale du boîtier-canal par rapport à l'axe médian du boîtier-canal (33).

16. Assemblage combustible suivant la revendication 15,
**caractérisé en ce que** l'axe médian de l'agencement ayant au moins le tube pour du fluide de refroidissement se trouve d'un côté d'une deuxième diagonale qui est perpendiculaire à une diagonale (DG) et dans laquelle les crayons combustibles disposés sur le bord du modèle sont à une distance plus petite de la paroi du boîtier-canal que ne l'est l'autre côté de la deuxième diagonale.

17. Assemblage combustible suivant la revendication 14,
**caractérisé en ce que** le modèle carré régulier est décalé dans la direction d'une diagonale (DG) de la section transversale du boîtier-canal par rapport à l'axe médian du boîtier-canal de sorte que les crayons combustibles disposés au bord du modèle à une extrémité de la diagonale (DG) sont, respectivement, à une distance plus grande d'une paroi du boîtier-canal (33) qu'à l'autre extrémité de la diagonale (DG).

18. Assemblage combustible suivant l'une des revendications 15 ou 16,
**caractérisé en ce que** dans une moitié, disposée symétriquement par rapport à la diagonale (DG), de la section transversale du boîtier-canal se trouve un nombre de crayons combustibles plus courts plus grands que dans l'autre moitié de la section transversale du boîtier canal et **en ce que** l'axe médian de l'agencement ayant au moins le tube pour du fluide de refroidissement se trouve du côté d'une deuxième diagonale qui est perpendiculaire à la diagonale (DG) et sur laquelle se trouve le nombre plus grand des crayons combustibles plus courts.

19. Assemblage combustible suivant l'une des revendications 14 à 18,
**caractérisé en ce que** plusieurs des crayons (PL, PL') combustibles plus courts sont disposés directement à côté de l'agencement ayant au moins le un tube pour du fluide de refroidissement et dans une moitié de la section transversale du boîtier-canal qui est disposée symétriquement par rapport à la diagonale (DG).

20. Assemblage combustible suivant la revendication 15,
**caractérisé en ce qu'**au moins une partie des crayons (PL') combustibles les plus courts sont immédiatement voisins de l'agencement ayant au moins le un tube pour du fluide de refroidissement.
